# EUROPEAN PATENT APPLICATION

(11) **EP 4 435 485 A1**
(43) Date of publication of application: **25.09.2024**
(21) Application number: 24163109.2
(22) Date of filing: 13.03.2024
(51) Int. Cl.: G02B 6/44

(54) **AN OPTICAL JUNCTION BOX**

(30) Priority: 23.03.2023 IT 202300005586
(71) Applicant: Prysmian S.p.A., 20126 Milano (IT)
(72) Inventor: Paddick, Nathan, 20126 Milano (IT)
(74) Representative: Perani & Partners S.p.A.

(57) **Abstract**

An optical junction box (1) comprising a base (10) having a fiber receiving area (11) and a sidewall (12) surrounding the fiber receiving area (11) and defining an access aperture (13) to the fiber receiving area (11); the sidewall (12) comprising one or more first apertures (14) configured to receive optical cables (2) having one or more optical fibers and one or more second apertures (15) configured to receive pre-connectorized optical cables (3); a retaining tray (20) pivotally attached to the base (10) to pivot between a closed position, in which the retaining tray (20) prevents access to the fiber receiving area (11), and an open position, in which the retaining tray (20) is rotated with respect to the base (10) to allow access to the fiber receiving area (11); the retaining tray (20) has a first surface (20a) facing the fiber receiving area (11) in the closed position and an opposite second surface (20b); the retaining tray (20) comprising cable retaining members (30) arranged on the second surface (20b) and configured to retain the pre-connectorized optical cables (3) to constrain the retained pre-connectorized optical cables (3) to the retaining tray (20) and to hold optical adapters (4) for connecting the retained pre-connectorized optical cables (3) to optical fibers (5), fiber routing apertures (40) configured to route one or more optical fibers (5) of optical cables (2) from the fiber receiving area (11) to the optical adapters (4) held by the cable retaining members (30), tray splicing members (100) arranged on the second surface (20b) and configured to hold optical fiber splices.

## Description

### Field of the invention

The present invention relates to the field of equipment and components for the installation of optical cables in optical access networks. In particular, the present invention relates to an optical junction box for optical cables such midspan cables and pre-connectorized optical cables.

### Background of the invention

A FTTx (for example FTTN, FTTC, FTTB, FTTH) network is an optical access network providing a number of end customers with broadband communication services from operators, i.e. with services requiring data transmission at a very high rate, for example of some Mbit/s.

Typically, a FTTx network comprises multiple junction or distribution boxes or cabinets which cooperate with an access network and which may be installed in or near the basement of the building where end users reside, in an underground pit, on a wall, or on a pole. Junction or distribution boxes allow to splice the fibers from an input optical cable, such as the midspan cable, with drop connection cables, such as pre-connectorized optical cables.

An installed optical junction may be opened for example for maintenance issues or for changing some fiber connections therein. During such operations there are significant risks of fiber damage as well as problems for the operator to correctly operate on the splices and on the optical cables.

In the state of art, there are different solutions for the junction box. An example is FDC-W8 FAT Closure product of Commscope. The closure is a butt type gel sealed fiber optic splicing and patching closure designed for the Fiber Access Point in the FTTx network. This closure can be deployed on walls, poles and in hand holes. FDC-W8 FAT closure has four main cable ports and eight drop cable ports, a loop storage of loose tubes and it allows two main cables loop through at the same time. The closure can accommodate up to 24 fusion splices (or 8 mechanical splices), two PLC splitters and 8 SC adapters. For the FDC-W8 FAT closure, the sealing is achieved via built-in gel technology, resulting in extremely convenient re-entry and re-sealing. It is to be noted that the closure has a lower tray with a coiling and splice area and an upper tray with adapters. The arrangement of FDC-W8 FAT closure presents fiber management problems, since the possibility to work on the main cable in the lower tray and on the splicing area is extremely limited after the first installation. Furthermore, the arrangement and the coupling of the lower tray with the upper tray can increase the risks to damage the already connected fibers.

Another example of junction box is Aerial Subscriber Node which is a product of Hexatronic. This box is a compact solution for installing pre-terminated drop cables for FTTX applications. It includes a trunk splice area with under cassette midspan storage and hinged patch plate underside housing splitter modules for pre-terminated drop cables. Specifically, the Aerial Subscriber Node comprises a splice area under the hinged plate which makes difficult to operate on it after the first installation. Furthermore, in such arrangement, the midspan cable layer is no longer accessible in conjunction with the splice panel layer because it is covered and locked by the splice panel once the input midspan cable is secured and the splicing area is added.

### Summary of the invention

The Applicant has tackled the problem of improving separation between cable storage area, splicing area and retaining area for pre-connectorized cables, whereby fiber management is simplified and fibers damaging risks are reduced.

The Applicant has found that providing an optical junction box having a base for receiving optical cable and a retaining tray pivotally attached to the base and configured to retain optical pre-connectorized cables, to splice and to route optical fibers from the base to the optical adapters, optimizes and improves the fiber management and at the same time reduces the fiber damaging risks.

Therefore, according to one aspect, the present invention relates to an optical junction box comprising a base having a fiber receiving area and a sidewall surrounding the fiber receiving area and defining an access aperture to the fiber receiving area, the side wall comprising one or more first apertures configured to receive optical cables having one or more optical fibers and one or more second apertures configured to receive pre-connectorized optical cables. The junction box further comprises a retaining tray pivotally attached to the base to pivot between a closed position, in which the retaining tray prevents access to the fiber receiving area, and an open position, in which the retaining tray is rotated with respect to the base to allow access to the fiber receiving area. The retaining tray has a first surface facing the fiber receiving area in the closed position and an opposite second surface. The retaining tray comprises cable retaining members arranged on the second surface and configured to retain the pre-connectorized optical cables to constrain the retained pre-connectorized optical cables to the retaining tray and to hold optical adapters for connecting the retained pre-connectorized optical cables to optical fibers, fiber routing apertures configured to route one or more optical fibers of optical cables from the fiber receiving area to the optical adapters held by the cable retaining members and tray splicing members arranged on the second surface and configured to hold optical fiber splices.

According to one embodiment, the retaining tray has a tray receiving portion configured to receive the pre-connectorized optical cables, in the closed position the tray receiving portion being arranged at the second apertures, a tray routing portion, the fiber routing apertures being formed at the tray routing portion and a tray retaining portion arranged between the tray receiving portion and the tray routing portion.

According to one embodiment, the cable retaining members comprise a retaining frame arranged at the tray retaining portion and projecting from the second surface along a retaining direction transversal to the second surface and comprising adapter apertures configured to hold optical adapters and cable retaining elements arranged at the tray receiving portion and configured to retain the pre-connectorized optical cables.

According to one embodiment, the retaining tray comprises routing members arranged on the second surface at the tray routing portion and configured to route the optical fibers on the second surface.

According to one embodiment, the retaining tray comprises a cover tray arranged on the second surface and configured to pivot between a closed position in which the cover tray prevents access to the tray routing portion and to at least a portion of the tray retaining portion, and an open position, in which the cover tray is rotated to allow access to the tray routing portion and to the tray retaining portion.

According to one embodiment, the tray splicing members are arranged at the tray routing portion on the second surface.

According to one embodiment, the fiber routing apertures are configured to define paths between the first surface and the second surface for the optical fibers.

According to one embodiment, the optical junction box comprises first sealing members and second sealing members respectively associated to the first apertures and to the second apertures, the first sealing members and the second sealing members are configured to seal respectively the first apertures and the second apertures receiving optical cables and pre-connectorized optical cables and sealing closures associated to first apertures and second apertures respectively free from optical cables and pre-connectorized optical cables and configured to seal the respective first apertures and second apertures.

According to one embodiment, the base comprises base routing members configured to route the optical cable and the optical fibers.

According to one embodiment, the optical junction box comprises a box cover removably associated to base and defining with the base a fiber housing.

### Brief description of the drawings

The present invention will now be described in more detail hereinafter with reference to the accompanying drawings, in which embodiments of the invention are shown.
FIG. 1 is a perspective view of an optical junction box according to one embodiment of the invention with some parts removed and the retaining tray in an open position;
FIG. 2 is a perspective view of an optical junction box according to one embodiment of the invention with the retaining tray in a closed position and the cover tray in an open position;
FIG. 3 is top view the optical junction box of figure 2 with the cover tray removed;
FIG. 4 is a perspective view of an optical junction box according to one embodiment of the invention with the retaining tray in a closed position and the cover tray in a closed position;
FIG. 5 is a top view of the optical junction box of figure 1 with the cover tray in an open position;
FIG. 6 is lateral view the optical junction box of figure 4 after the removal of the cover tray;
FIG. 7 is a top view of the optical junction box with box cover;
FIG. 8 is a front view of the optical junction box with a box cover;
FIG. 9 is a top view of the sealing closures for the optical junction box.

### Detailed description

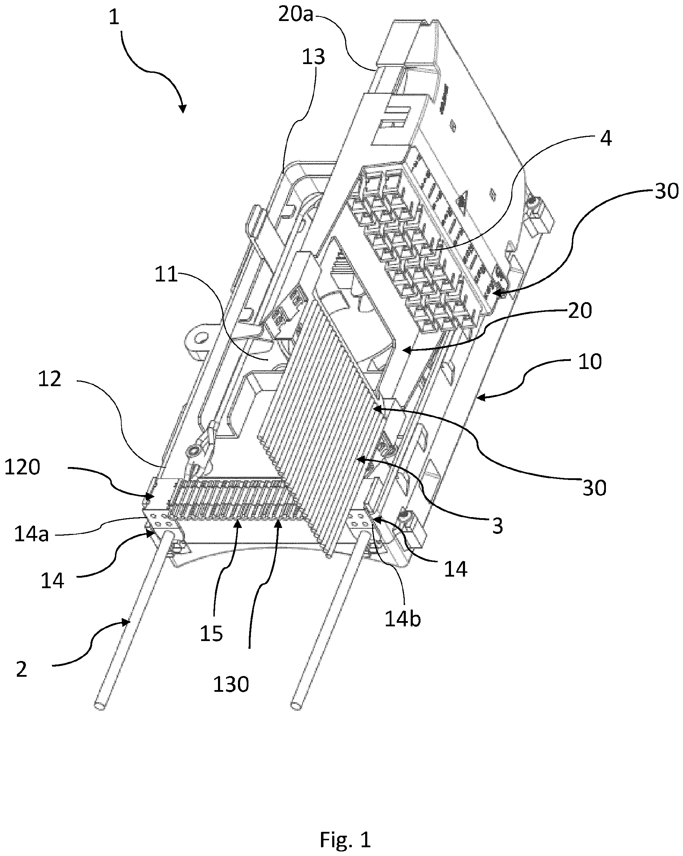

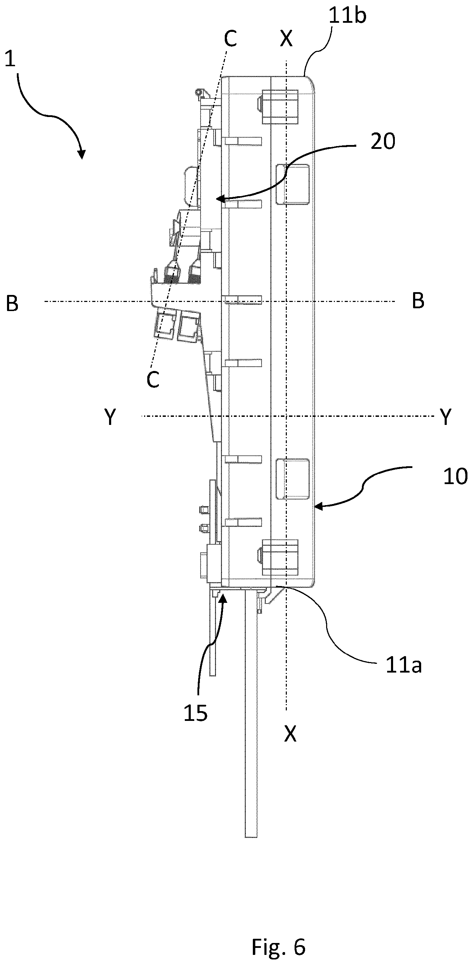

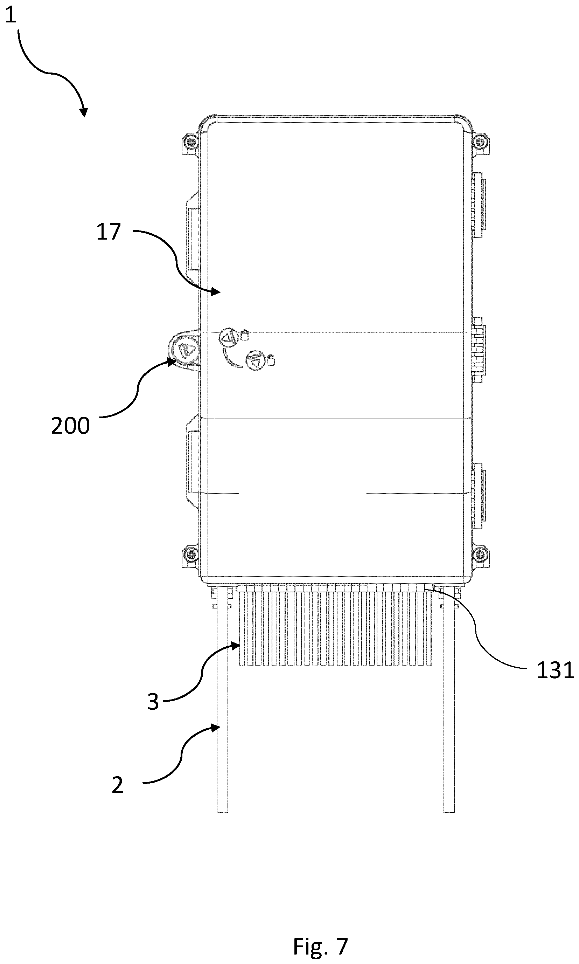

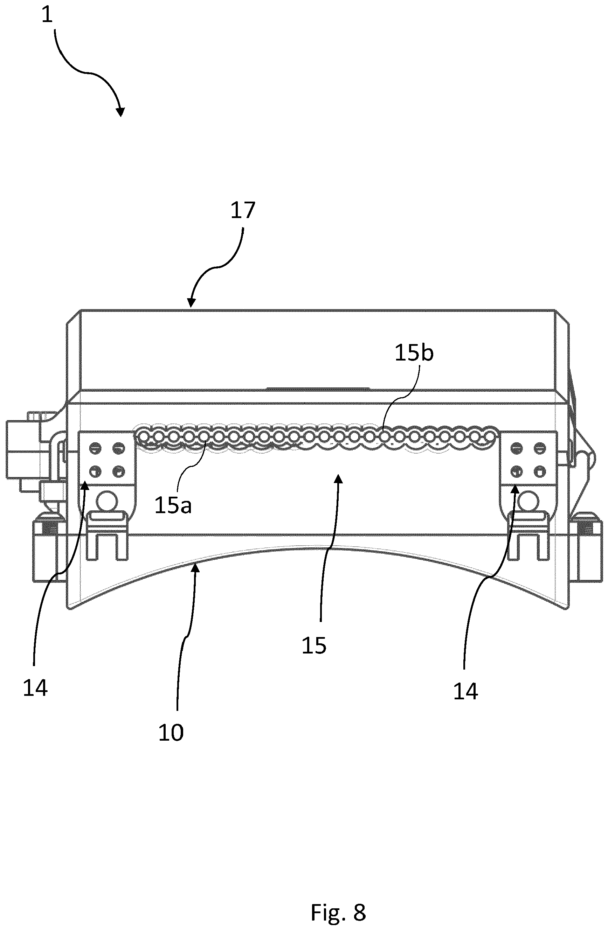

Figures 1-9 show an optical junction or distribution box 1.

The optical junction box 1 comprises a base 10 having a fiber receiving area 11 and a sidewall 12 surrounding the fiber receiving area 11. The fiber receiving area 11 is configured to manage optical cable 2 and optical fibers by routing and coiling.

The base 10 extends from a base receiving portion 11a to an opposed base routing portion 11b along an extension direction X-X.

The base 11 defines with the sidewall 12 an access aperture 13 to the fiber receiving area 11.

For example, the base 10 comprises a base plate 10a on which the fiber receiving area 11 is arranged and from which the sidewall 12 extends along a projecting direction Y-Y perpendicular to the base plate 10a.

In some embodiments, the base 10 comprises base routing members 16 configured to route and for example to coil the optical cable 2 and the optical fibers. The base routing members 16 are configured to define the fiber receiving area 11. For example, the base routing members are associated to the base plate 10a.

According to one embodiment, the base routing members 16 comprises first base routing elements 16a configured to route and retain the optical cable 2 along a routing path on the base 10. For example, the base routing members 16 comprise second base routing elements 16b to route and storage by coils the optical fibers of the optical cable 2.

The optical junction box 1 comprises a box cover 17 removably associated to base 10 and defining with the base 10 a fiber housing for receiving optical cables and fibers and for providing a space for optical connections. The box cover 17 is pivotally attached to the base 10 to pivot between a closed position, in which box cover 17 prevents access to the fiber housing and an open position in which the cover base 17 is rotated with respect to the base 10 to allow access to the fiber housing.

In several embodiments, the sidewall 12 comprises one or more first apertures 14 configured to receive optical cables 2 having one or more optical fibers, such as midspan cable and one or more second apertures 15 configured to receive pre-connectorized optical cables 3.

The first apertures 14 are arranged at the base receiving portion 11a and, according to one embodiment, are divided in two groups 14a, 14b comprising at least one first aperture 14. The two groups 14a, 14b are spaced apart along a separation direction Z-Z perpendicular to the extension direction X-X.

Thanks to the mutual spacing apart of the group of apertures 14a, 14b, the junction box 1 provides a correct bending of the optical cable 2 with the first base routing elements 16a. The optical cable 2 can enter the junction box 1 from one group and exit from another group.

The second apertures 15 are arranged at the base receiving portion 11a of the sidewall 12 between the two groups of apertures 14a, 14b.

In some embodiments, second apertures 15 are formed at least in part in the sidewall 12 and at least in part in the box cover 17. Namely, in the present embodiments, the sidewall 12 and the box cover 17 comprise complementary semi-apertures 15a, 15b which define second apertures 15 when the box cover 17 is in the closed position.

In several embodiments, the optical junction box 1 comprises first sealing members 120 and second sealing members 130 respectively associated to the first apertures 14 and the second apertures 15. The first sealing members 120 and the second sealing members 130 are configured to seal respectively the first apertures 14 and the second apertures 15 receiving optical cables 2 and pre-connectorized optical cables 3.

In several embodiments, the first sealing members 120 define one or more sealing channels 121 extending between relative apertures to receive and retain the optical cables 2 in a sealing manner. The second sealing member 130 defines one or more sealing channels 131 extending between relative apertures to receive and retain the pre-connectorized cables 3 in a sealing manner. Each sealing channel 131 can comprise an open scoring line which allows the optical cable to slide along the scoring line up to the channel 131.

In the embodiment with the semi-apertures 15a, 15b, the second sealing members 130 are respectively divided between the sidewall 12 and the cover box 17 for providing the sealing.

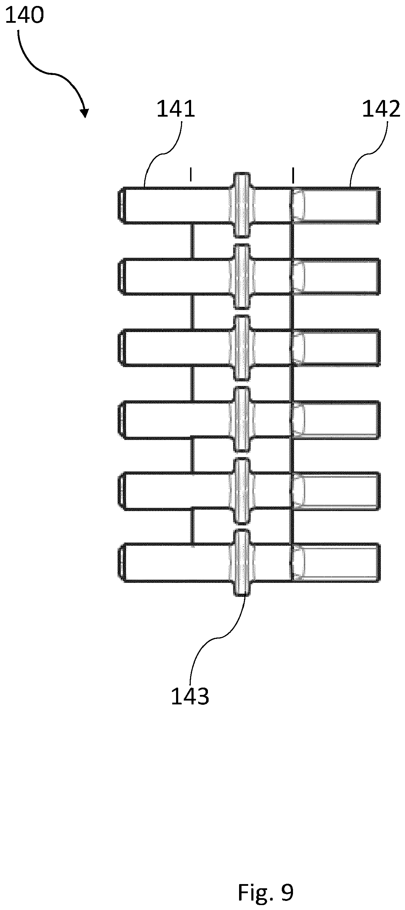

In some embodiments as shown in figure 9, the optical junction box 1 comprises sealing closures 140 associated to first apertures 14 and second apertures 15 respectively free from optical cables 2 and pre-connectorized optical cables 3. The sealing closures 140 are configured to seal the respective first apertures 14 and second apertures 15 in case of absence of optical cables 2 or pre-connectorized optical cables 3 in the relative apertures 14, 15. Each sealing closures 140 can be inserted in the relative channels 121, 131 to provide the sealing effect.

In some embodiments, each sealing closure 140 extends between an insertion end portion 141 and an extraction end portion 142. The insertion end portion 141 is configured to be inserted into a relative channel 121, 131 to seal it and it is shaped as the channel 121, 131. The extraction end portion 142 is configured to be handle by an operator for the insertion/extraction of the insertion end portion 141 in/from the channel 121,131. Each sealing closure 140 further comprises a flange 143 arranged between the insertion end portion 141 and the extraction end portion 142. The flange 143 is configured to engage the sidewall 12 proximate to the apertures 14, 15 upon insertion of the insertion end portion 141 in a channel 121, 131. Such engagement limits the insertion of the sealing closure 140 inside a channel 121, 131.

In some embodiments, the sealing closures 140 comprise plugs.

The junction box 1 comprises a retaining tray 20 pivotally attached to the base 10.

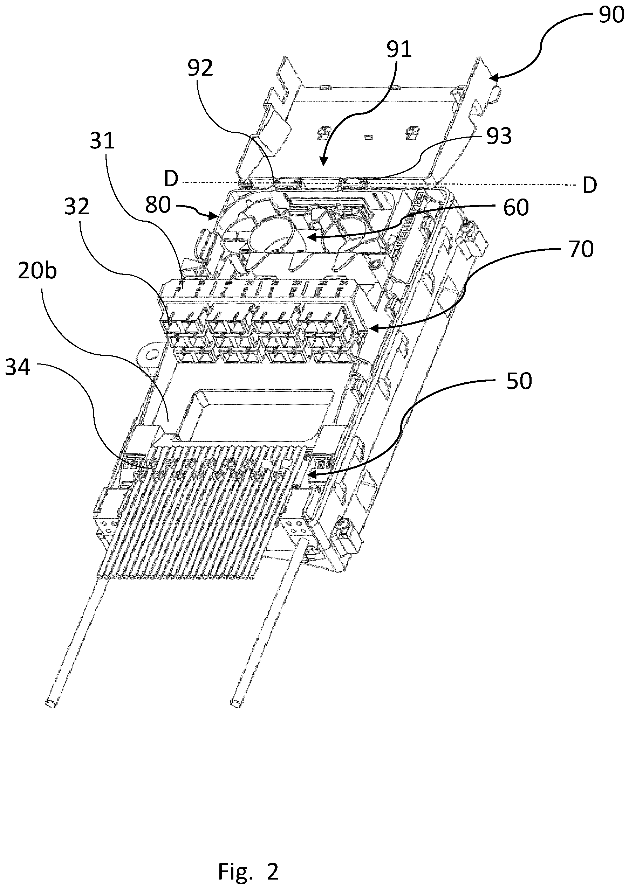

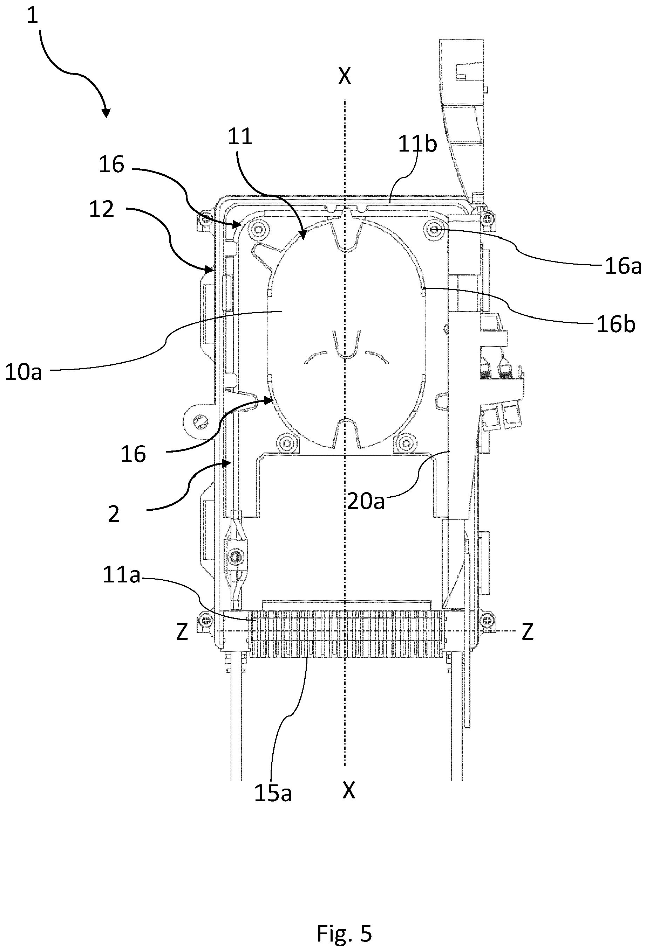

The retaining tray 20 is configured to pivot between a closed position (figures 2-4 and figure 6), in which the retaining tray 20 prevents access to the fiber receiving area 11, and an open position (figure 1 and figure 5), in which the retaining tray 20 is rotated with respect to the base 10 to allow access to the fiber receiving area 11.

In some embodiments, the optical junction box 1 comprises a first hinge arrangement configured to pivotally hinge the retaining tray 20 to the base 10. The hinge arrangement comprises first connecting members associated to the base 10 and second connecting members associated to the retaining tray 20 coupled with the first connecting member to define a rotation axis A-A to pivotally hinge the retaining tray 20 to the base 10. For example, the rotation axis A-A is parallel to the extension direction X-X.

The retaining tray 20 has a first surface 20a facing the fiber receiving area 11 in the closed position and an opposite second surface 20b.

The retaining tray 20 has a tray receiving portion 50, a routing portion 60 and a tray retaining portion 70. For example, the retaining tray 20 extends along the extension direction X-X between the tray receiving portion 50 and the routing portion 60. According to one embodiment, the tray retaining portion 70 is arranged between the tray receiving portion 50 and the tray routing portion 60.

In several embodiments, the tray receiving portion 50, the tray routing portion 60 and the tray retaining portion 70 are defined on the second surface 20b.

Thanks to the arrangement of the tray receiving portion 50, the tray routing portion 60 and the tray retaining portion 70 on the second surface 20b, the managing of the pre-connectorized cable 3, splicing and connection of the optical fibers to the adapters is simplified reducing possible damages to fibers and optical cables.

The tray receiving portion 50 is arranged at the second apertures 15 in the closed position and can be proximate to the base receiving portion 11a. In particular, the tray receiving portion 50 is configured to receive the pre-connectorized optical cables 3.

The tray routing portion 60 is configured to manage the optical fibers. In particular, the tray routing portion 60 allows to route and coils the optical fibers for managing connections of the optical fibers coming from the base with the pre-connectorized cable 3. For example, in the closed position of the tray, the tray routing portion 60 is arranged proximate to the base routing portion 11b.

In several embodiments, the retaining tray 20 comprises cable retaining members 30, first routing apertures 40 and tray splicing members 100.

The cable retaining members 30 are arranged on the second surface 20b and are configured to retain the pre-connectorized optical cables 3 to constrain the retained pre-connectorized optical cables 3 to the retaining tray 20. The cable retaining members 30 are further configured to hold optical adapters 4 for connecting the retained pre-connectorized optical cables 3 to optical fibers 5.

Thanks to the constrain of the pre-connectorized optical cables 3 to the retaining tray 20, the retaining tray 20 moves all the constrained pre-connectorized optical cables 3 during pivoting. This simplifies the access to the base 10 reducing the risks of a damaging of the optical cables and the fibers associated to the second surface 20b of the retaining tray 20.

In some embodiments, the cable retaining members 30 comprise a retaining frame 31 arranged at the retaining portion 70 and projecting from the second surface 20b along a retaining direction B-B transversal to the second surface 20b. The retaining direction B-B can be parallel to the projection direction Y-Y. The retaining frame 31 comprises adapter channels 32 configured to hold optical adapters 4. Specifically, the retaining frame 31 is configured to hold optical adapter 4 in an angled arrangement for correctly bending the optical pre-connectorized cables 3. In particular, the adapter channels 32 are inclined with respect the retaining direction B-B along a channel direction C-C.

The retaining frame 31 comprises an array 33 of adapter apertures 32. The array comprises rows 33a and columns 33b to correctly organize and retain the pre-connectorized cable 3.

Preferably, each optical adapter 4 has two opposed receiving ends 4a, 4b respectively for retaining optical connectors of the pre-connectorized optical cables 3 and optical connectors 7 of the optical fibers 8.

The cable retaining members 30 further comprises cable retaining elements 34 arranged at the tray receiving portion 50 and configured to retain the pre-connectorized optical cables 3. Each cable retaining element 34 acts on the outer surface of the cables passing through the second apertures 15 to constrain the relative portion of the cable to the retraining tray 20.

The fiber routing aperture 40 are configured to route one or more optical fibers 8 of optical cables 2 from the fiber receiving area 11 to the optical adapters 4 held by the cable retaining members 30. According to one embodiment, the fiber routing apertures 40 are formed at the routing portion 60.

In some embodiments, the fiber routing apertures 40 are configured to define paths between the first surface 20a and the second surface 20b for the optical fibers 8.

According to one embodiment, the retaining tray 20, in the open position, allows an easy access to the input optical cables 2, namely to the input midspan cable routed in the fiber receiving area 11. The retaining tray 20 moves the optical pre-connectorized cables 3 to access the fiber receiving area 11 preventing at the same time accidental disconnection of customer. Such easy access and disconnection prevention are allowed thanks to the pivoting of the retaining tray 20 and to the movement of the constrained optical pre-connectorized 3 cables. When the retaining tray 20 is in the closed position, optical pre-connectorized cables 3 return to original position in the second sealing members 130.

The splitting of the fibers and optical cables on the base 10 and on the retaining tray 20 allows fibers and relative connections to be added easily either through an optical splitter or fiber pigtails by accessing the midspan input cable 2 and connecting fibers by means of a splice.

Thanks to the fiber routing apertures 40, it is also possible to route the fibers from the base 10 to the retaining tray 20 on the second surface 20b for the relative connection by splicing and adapters. This allows a direct managing of optical connections.

The tray splicing members 100 are arranged on the second surface 20b and are configured to hold optical fiber splices. Preferably, the tray splicing members 100 are arranged at the tray routing portion 60 on the second surface 20b. In some embodiments, the tray splicing members 100 are also configured to hold splitters associated to relative splices.

In some embodiments, the retaining tray 20 comprises routing members 80 arranged on the second surface 20b at the tray routing portion 60. The routing members 80 are configured to route and preferably coil the optical fibers 8 on the second surface 20b between the fiber routing apertures 40 and the cable retaining members 30, namely the retaining frame 31.

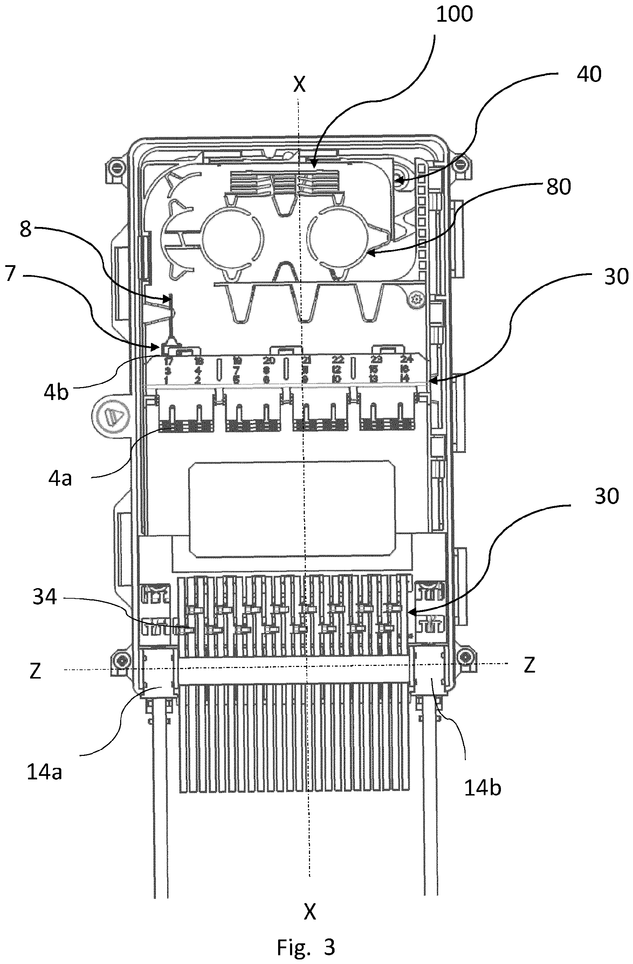

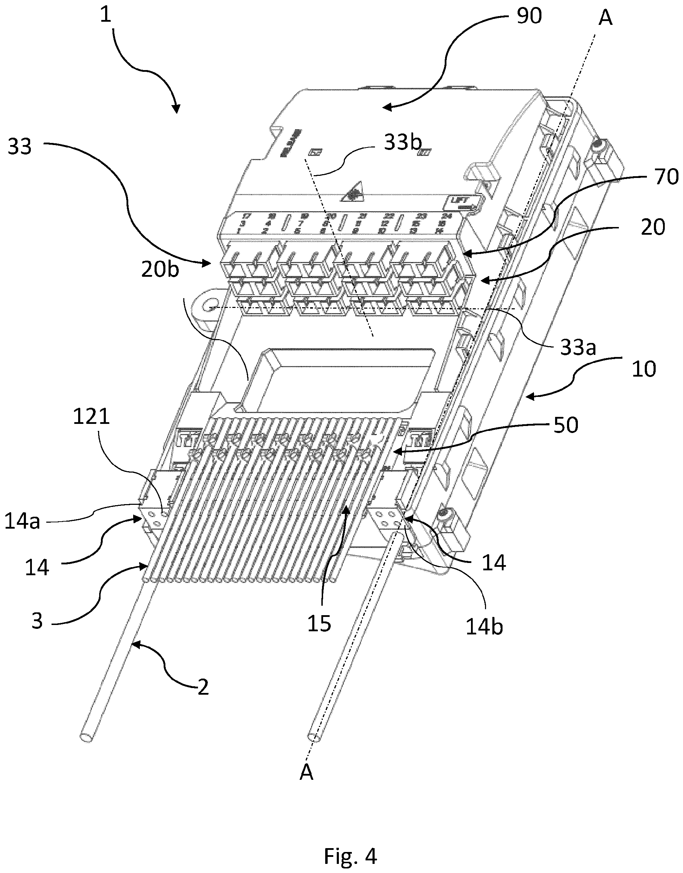

In several embodiments, the retaining tray 20 comprises a cover tray 90 arranged on the second surface 20b. The cover tray 90 is configured to pivot between a closed position (figure 1 and figure 4) in which the cover tray 90 prevents access to the tray routing portion 60 and to at least a portion of the tray retaining portion 70, preferably on the side of optical connectors 7 of the optical fibers 8, and an open position (figure 2 and figure 3), in which the cover tray 90 is rotated to allow access to the routing portion 60 and to the retaining portion 70.

Thanks to the cover tray 90, the routed optical fibers 8, the splicing, and at least a portion of the optical connectors 7 are protected.

In some embodiments, the retaining tray 20 comprises a second hinge arrangement 91 configured to pivotally hinge the cover tray 90. The second hinge arrangement 91 comprises first connecting members 92 associated to routing portion 60 and second connecting members 93 associated to the cover tray 90. The second connecting member 93 are coupled with the first connecting members 92 to define a second rotation axis D-D to pivotally hinge the cover tray 90 with respect the retaining tray 20 at the tray routing portion 60. For example, the second rotation axis D-D is perpendicular to the first rotation axis A-A.

In some embodiments, the optical junction box 1 comprises a first locking arrangement configured to lock the retaining tray 20 to the base 10 preventing rotation and access to the receiving area 11. The first locking arrangement comprises first locking members and second locking members respectively associated to the retaining tray 20 and to the base 10 or viceversa. The first locking members are configured to cooperate with the second locking members and to pass between an unlock configuration and lock configuration.

In some embodiments, the optical junction box 1 comprises a second locking arrangement (not shown in the figures) and a third locking arrangement 200 for respectively prevent the rotation of the cover tray 90 and the cover box 17. Namely, the second locking arrangement comprises respective first locking members associated to the cover tray 90 and relative second locking members associated to the retaining tray 20, while the third locking arrangement comprises respective first locking members associated to the cover box 17 and second locking members associated to the base 10. The first locking members and the second locking members of the second locking arrangement and of third locking arrangement operates as the first and second locking members of the first locking arrangement.

According to an alternative embodiment, the junction box 1 comprises an insert comprising a base tray associated to base 10 for defining the fibers receiving area 11 and the retaining tray 20 as above described hinged to the base tray.

## Claims

1. An optical junction box (1) comprising:
- a base (10) having a fiber receiving area (11) and a sidewall (12) surrounding the fiber receiving area (11) and defining an access aperture (13) to the fiber receiving area (11); the sidewall (12) comprising one or more first apertures (14) configured to receive optical cables (2) having one or more optical fibers and one or more second apertures (15) configured to receive pre-connectorized optical cables (3);
- a retaining tray (20) pivotally attached to the base (10) to pivot between a closed position, in which the retaining tray (20) prevents access to the fiber receiving area (11), and an open position, in which the retaining tray (20) is rotated with respect to the base (10) to allow access to the fiber receiving area (11); the retaining tray (20) has a first surface (20a) facing the fiber receiving area (11) in the closed position and an opposite second surface (20b); the retaining tray (20) comprising:
- cable retaining members (30) arranged on the second surface (20b) and configured to retain the pre-connectorized optical cables (3) to constrain the retained pre-connectorized optical cables (3) to the retaining tray (20) and to hold optical adapters (4) for connecting the retained pre-connectorized optical cables (3) to optical fibers (5),
- fiber routing apertures (40) configured to route one or more optical fibers (5) of optical cables (2) from the fiber receiving area (11) to the optical adapters (4) held by the cable retaining members (30),
- tray splicing members (100) arranged on the second surface (20b) and configured to hold optical fiber splices.

2. The optical junction box (1) according to claim 1, wherein the retaining tray (20) has:
- a tray receiving portion (50) configured to receive the pre-connectorized optical cables (3), in the closed position the receiving portion (50) being arranged at the second apertures (15);
- a tray routing portion (60), the fiber routing apertures (40) being formed at the routing portion (60),
- a tray retaining portion (70) arranged between the receiving portion (50) and the routing portion (60).

3. The optical junction box (1) according to claim 2, wherein the cable retaining members (30) comprise:
- a retaining frame (31) arranged at the tray retaining portion (70) and projecting from the second surface (20b) along a retaining direction (B-B) transversal to the second surface (20b) and comprising adapter apertures (32) configured to hold optical adapters (4);
- cable retaining elements (34) arranged at the tray receiving portion (50) and configured to retain the pre-connectorized optical cables (3).

4. The optical junction box (1) according to claim 2 or 3, wherein the retaining tray (20) comprises routing members (80) arranged on the second surface (20b) at the tray routing portion (60) and configured to route the optical fibers (8) on the second surface (20b).

5. The optical junction box (1) according to any claims 2 to 4, wherein the retaining tray (20) comprises a cover tray (90) arranged on the second surface (20b) and configured to pivot between a closed position in which the cover tray (90) prevents access to the tray routing portion (60) and to at least a portion of the tray retaining portion (70), and an open position, in which the cover tray (90) is rotated to allow access to the tray routing portion (60) and to the tray retaining portion (70).

6. The optical junction box (1) according to any claims 2 to 5, wherein the tray splicing members (100) are arranged at the tray routing portion (60) on the second surface (20b).

7. The optical junction box (1) according to any claims 1 to 6, wherein the fiber routing apertures (40) are configured to define paths between the first surface (20a) and the second surface (20b) for the optical fibers (8).

8. The optical junction box (1) according to any claims 1 to 7, wherein the optical junction box (1) comprises:
- first sealing members (120) and second sealing members (130) respectively associated to the first apertures (14) and to the second apertures (15), the first sealing members (120) and the second sealing members (130) are configured to seal respectively the first apertures (14) and the second apertures (15) receiving optical cables (2) and pre-connectorized optical cables (3);
- sealing closures (140) associated to first apertures (14) and second apertures (15) respectively free from optical cables (2) and pre-connectorized optical cables (3) and configured to seal the respective first apertures (14) and second apertures (15).

9. The optical junction box (1) according to any claims 1 to 8, wherein the base (10) comprises base routing members (16) configured to route the optical cable (2) and the optical fibers.

10. The optical junction box (1) according to any claims 1 to 9, wherein the optical junction box (1) comprises a box cover (17) removably associated to base (10) and defining with the base (10) a fiber housing.
